# EUROPEAN PATENT APPLICATION

(11) **EP 2 665 005 A2**
(43) Date of publication of application: **20.11.2013**
(21) Application number: 11854989.8
(22) Date of filing: 30.12.2011
(51) Int. Cl.: G06F 17/40, G06F 17/21, G06F 3/048, G06F 3/14

(54) **METHOD FOR SUPPORTING COLLECTION OF AN OBJECT COMPRISED IN A GENERATED IMAGE, AND A RECORDING MEDIUM ABLE TO BE READ BY TERMINAL DEVICES AND COMPUTERS**

(30) Priority: 04.01.2011 KR 20110000652
(71) Applicant: Olaworks, Inc., Seoul 135-919 (KR)
(72) Inventor: RYU, Ha Na, Suwon-si Gyeonggi-do 440-210 (KR)
(74) Representative: Goddar, Heinz J.
(86) International application number: PCT/KR2011/010386
(87) International publication number: WO 2012/093816

(57) **Abstract**

According to one aspect, the present invention concerns a supporting method for collecting objects comprised in a generated image, wherein the method comprises: (a) generating an image of a predetermined object by using a terminal device; (b) using recognition information about the nature of an object on a first area of the screen of the terminal device, recognition information about the location where the image was generated or recognition information about the time when the image was generated to automatically generate and supply an auto-comment about the object in the form of text composed to comply with the grammar of the applicable language, and automatically acquiring a thumbnail corresponding to a recognised object on a second area of the screen of the terminal device so as to display the same; and (c) collecting objects so as to store data supplied to the first area and the second area.

## Description

### Technical Field

The present invention relates to a method, a terminal and a computer-readable recording medium for supporting a collection of an object included in a created image. More specifically, it relates to the method, the terminal and the computer-readable recording medium for supporting experiences of multiple users on the object included in the image and their information to be created very easily and shared very effectively by recognizing the object, automatically creating and providing a grammatically combined sentence in a language as an auto-comment for the object on a first area of a screen of a terminal by using at least one from the recognition information on what the identity of the object is, the place where the image was created and the time when the image was created, automatically getting and displaying a thumbnail corresponding to the recognized objet on the second area of the terminal screen, if selection information on a collection button is entered, storing the data displayed on the first and second areas onto a storage space so as to perform the collection of the object.

### Background Technology

Recently, due to the widespread use of the Internet, it has become a general practice to provide information converted to a digital form which was once offered in a printed material form such as books. As the information converted into digital data may be shared and delivered in real time by many users thanks to the spread of the Internet and a 3G network or other high-speed communications systems, it is widely used compared to printed materials which has a shortcoming relatively from the standpoint of information sharing and delivery.

In particular, a technology of providing several information forms through a method for augmented reality (AR) which displays supplemental information, including computer graphics (CG), texts, etc., combined on an inputted image taken in real time by a user terminal has been recently introduced. According to the augmented reality technology, the technology may provide a better environment for the user because it may offer required information which may overlap with each other visually on the screen in which the real world that the user watches is displayed.

On the other hand, when several information sources are provided and shared by using the augmented reality as described above, it is actually difficult to determine the information on all objects included on an image photographed or inputted by a user terminal and effectively store the information. Even if the user wants to store only the information on the objects with relatively high interest (or importance) differentially, it is very cumbersome to systematically record and store the information. Therefore, it is true that it has a certain degree of limits to draw more active participation of the users.

### Detailed Description of the Invention

### Technical Task

It is an objective of the present invention to solve all of the problems described above.

It is another objective of the present invention to complete an auto-comment on an object by using information included in the preset image such as its identity, location, and time, automatically acquire, complete and display data including image thumbnail, etc. corresponding to the object, and allow this to be systematically stored by simple manipulation of a button alone so that it may be conveniently and quickly stored without cumbersome editing of various information on numerous objects around a user one by one.

It is still another objective of the present invention to allow the user to share information on the other users' collections based on the collected information on the various objects included in the created images so as to provide the user with information appropriate to the user's preference.

### Means of Task Resolution

The following describes the representative configuration of the present invention for achieving the objectives.

According to one aspect of the present invention, provided is a method for supporting collection of an object included in a created image comprising (a) a step in which a terminal is used to operate an image of an object; (b) a step, once the image is created, to support for performing collection of the object included in the image, at least one of recognition information on the identity of the object, recognition information on the place where the image was created, and recognition information on the time when the image was created is used to automatically create and provide a combined sentence correct under the grammar of a language as an auto-comment for the object on a first area on the screen of the terminal, and a thumbnail corresponding to the recognized object is automatically acquired and displayed on a second area of the screen of the terminal, and (c) a step in which, once selection information on a collection performing button is inputted, data to be provided on the first area and the second area is allowed to be provided onto a storage space so as to perform collection on the object.

According to another aspect of the present invention, provided is a terminal for supporting collection of an object included in a created image comprising an image taking part that creates an image of an object, an auto-comment creating part that once the image is created, to support for performing collection of the object included in the image, at least one from the recognition information on the identity of the object, recognition information on the place where the image was created, and recognition information on the time when the image was created is used to automatically create and provide a combined sentence correct under the grammar of a language as an auto-comment for the object on a first area on the screen, a correspondence image selecting part that, once the image was created by the image taking part, to support for performing collection of the object included in the image, automatically acquires and displays a thumbnail corresponding to the recognized object on the second area of the screen, and a collection performing part that, once selection information on a collection performing button is inputted, allows the data to be provided on the first area and the second area to be provided onto a storage space so as to perform collection on the obj ect.

In addition, another method and system for implementing the present invention and other computer-readable recoding medium for recording a computer program to run the method are further provided.

### Effects of the Invention

According to the present invention, information including the identity of an object included in a created image, place and time for which the image was created, etc. is used to automatically complete in the form of a sentence according to the grammar of an applicable age and a thumbnail image corresponding to an applicable object is automatically displayed so that a user may very easily and efficiently perform collection on the object desired by a user without cumbersome editing one by one.

In addition, according to the present invention, a user may perform collection on numerous objects scattered around him or her very easily and more specifically, perform collection of information on the object systematically by pressing a photography button for the object present around him or her and then pressing a collection registration button once again (that is, by selection of buttons twice only) based on the auto-comment and auto image automatically provided to enable to perform collection of information about the object systematically, which leads to active participation of the user.

Furthermore, according to the present invention, because collection about a specific object can be performed very easily, relationship information among many users is acquired more accurately through explosive increase in collection information so that a true social network may be formed.

### Brief Description of the Invention

Figure 1 is a block diagram which exemplarily represents the internal configuration of a terminal in accordance with an embodiment example of the present invention.

Figure 2 is a drawing for describing a process of getting an image included in an object in an embodiment example of the present invention.

Figure 3 is a drawing for describing a process of displaying an auto-comment and a thumbnail image in an embodiment example of the present invention.

Figure 4 is a diagram for describing a process of performing a collection for the object in an embodiment example of the present invention.

Figure 5 is a diagram for describing a process of managing the collected object in an embodiment example of the present invention.

Figure 6 is a drawing for describing a process of editing the auto-comment of an object in an embodiment example of the present invention.

Figure 7 is a diagram for interpreting a process of editing the thumbnail of an object in an embodiment example of the present invention.

### Embodiments of the Present Invention

In the following detailed description of the present invention, reference is made to the accompanying drawings that show specific embodiment examples as illustrations in which the present invention may be practiced. These embodiment examples are described in sufficient detail to enable those skilled in the art to practice the invention. It is to be understood that the various embodiment examples of the invention, although different, are not necessarily mutually exclusive. For example, a particular feature, structure, or characteristic described herein in connection with one embodiment example may be implemented within other embodiment examples without departing from the spirit and scope of the invention. In addition, it is to be understood that the location or arrangement of individual elements within each disclosed embodiment example may be modified without departing from the spirit and scope of the invention. The following detailed description is, therefore, not to be taken in a limiting sense, and the scope of the present invention is defined only by the accompanying claims, if they are appropriately interpreted, along with the full range of equivalents which the claims claim. In the drawings, similar numerals refer to the same or similar functionality throughout the several aspects.

The following describes the present invention in detail by referring to the preferred embodiment examples of the present invention so that those having common knowledge in the technical field to which the present invention belongs may easily practice the present invention.

[Preferred Embodiment Examples of the Invention]

In the specification, a collection may be defined to indicate a series of processes of collecting and storing an auto-comment made by using at least one from the information on the identity of an object which contains its type, property, etc. included in an image and the information on the place and time of photographing the image including the applicable object and a thumbnail corresponding to the applicable object as data. For example, if a movie poster is included in an inputted image, a series of processes of recognizing an applicable poster as the target object of the collection and collecting and storing the information on a combined sentence correct under the grammar of a language from the information on the movie corresponding to the poster (including its synopsis, director, and leading actor and actress information) and the information on the placed and time at which the image including the poster was photographed as data are applicable to the collection for the movie poster.

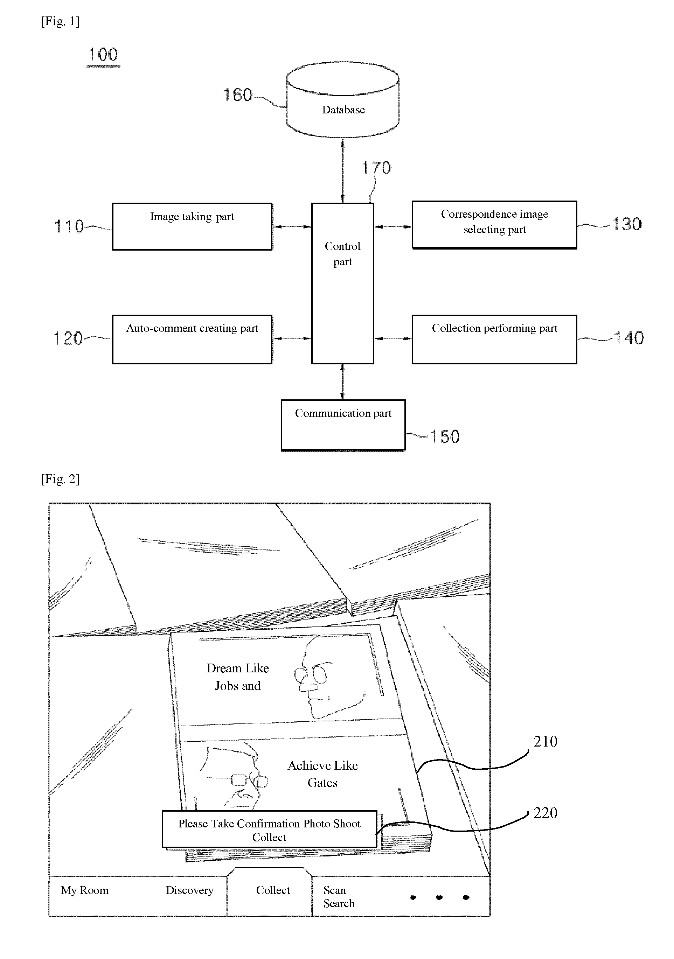

Figure 1 is a block diagram which exemplarily represents the internal configuration of a terminal in accordance with an embodiment example of the present invention.

As illustrated in Figure 1, a terminal (100) in accordance with an embodiment example of the present invention may include an image taking part (110), an auto-comment creating part (120), a correspondence image selecting part (130), a collection performing part (140), a communication part (150), a database (160) and a control part (170).

The image taking part (110) may include a camera for taking an image inputted from outside so as to create the image. Furthermore, the image taking part (110) may determine whether there is an object to be a target of a collection included in the image.

If it is determined that the object to be a target of a collection is included in the image taken, the auto-comment creating part (120) collects the information on the object and automatically completes an auto-comment. As an embodiment example, the completed auto-comment includes the registration information on the identity of the object which contains its type, name, application, etc., the information on the place where the image with the object was taken, the recognition information on the time when it was taken and the like.

Furthermore, if it is determined that the object to be a target of a collection is included in the image taken, the correspondence image selecting part (130) may select a thumbnail image corresponding to the object. The detailed method, therefore, will be described below. The selected thumbnail image may be automatically displayed on the screen of the terminal (100) with the auto-comment completed by the auto-comment creating part (120).

In such a state that the auto-comment and the thumbnail image for the target object of the collection have been automatically provided on the screen, if a collection button is selected by the user, the collection performing part (140) completes the collection of the object by storing the auto-comment and the thumbnail image to be described below onto the database (160).

On the other hand, in accordance with an embodiment example of the present invention, it is also possible to provide information on relationships between a specific user and other users who collected an object that is same as, or similar to, that stored in a database (160) in connection with a social network service (SNS). For example, it will be possible to acquire information on other users with the same or similar preference with the specific user by referring to the identity of the collected objects, a category to which the objects pertain, a location where the objects were collected, the time when the objects were collected, etc. and give a service for recommending this to the specific user. To provide such service, the terminal (100) may be additionally furnished with a module such as a separate human relationship inferring part (not illustrated).

Figure 2 is a drawing for describing a process of getting an image included in an object in an embodiment example of the present invention.

When referring to Figure 2, an image (200) to be taken by the image taking part (110) is displayed on the screen of the terminal (100). As illustrated on Figure 2, an icon (220) which provides a function for taking an image for the collection is displayed and, if the user selects the icon (220), it will be possible to take the image (200) displayed on the screen.

If the image (200) is taken and stored, the image taking part (110) determines whether an object (210) to be a target of the collection is included in the image (200) or not. The object (210) may be made to be directly selected by the user or automatically selected within the image (200) by an object recognition technology, an optical character recognition technology or a barcode recognition technology. Because the user frequently and generally takes the image (200) while placing the object (210) which the user wants to collect closely to the center of the image (200), it may be possible to allow the object (210) on the center of the image (200) to be recognized as a target of the collection, as illustrated in Figure 2.

On the other hand, in the embodiment example, a case in which a book is recognized as the object (210), the target of the collection, is described as an embodiment example.

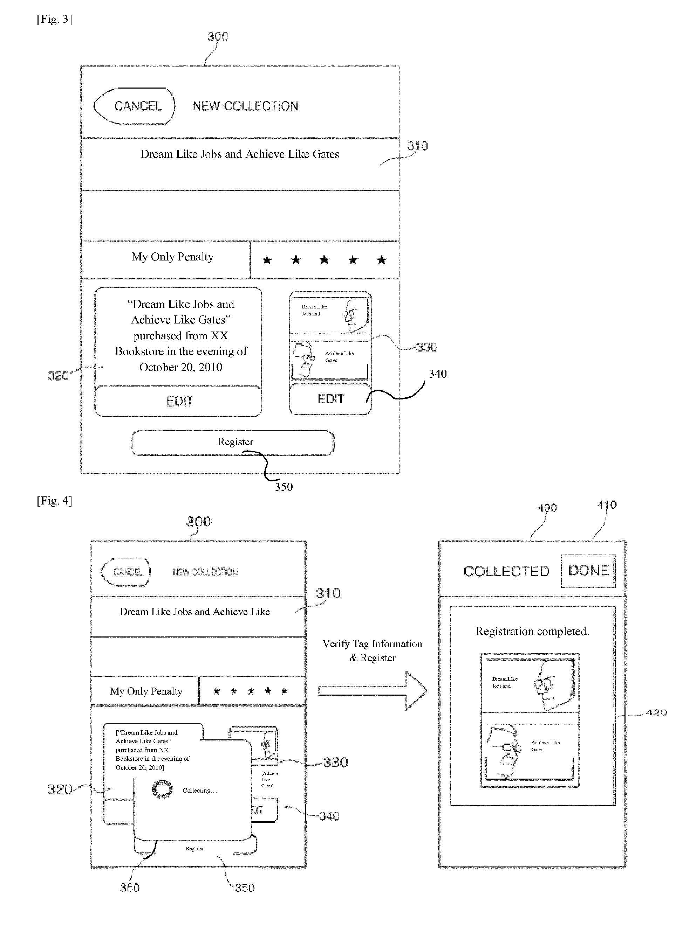

Figure 3 is a drawing for describing a process of displaying an auto-comment and a thumbnail image in an embodiment example of the present invention.

When referring to Figure 3, to support the collection for the object (210) which is the target of the collection, it may use at least one from the recognition information on the identity (i.e., the title of a book) of the object (210), recognition information on the place where the image including the object (210) was created (i.e., XX Bookstore) and recognition information on the time when the image was created (i.e., Oct. 20, 2010) to automatically create and display a combined sentence correct under the grammar of the language as an auto-comment for the object (210) (i.e., purchased "Dream Like Jobs and Achieve Like Gates" at xx Bookstore in the evening on Oct. 20, 2010) on a first area (320) of a screen (300), and automatically acquire and display a thumbnail corresponding to the recognized object (210) on a second area (330) of the terminal (300).

At this time, on the area (310) on the screen (300), the title of the book (i.e., Dream Like Jobs and Achieve Like Gates) which is one from the recognition information on the identity of an object that enables to identify the objet, the target of collection, may overlap with a part of the contents of the area (320) and be displayed; it may be considered as an area for displaying the recognition information on the identity of the object; it would also be treated as the first area together with the area (320). That is, the first area may be separated into the area (310) and the area (320) and configured.

On the other hand, the thumbnail provided on the second area (330) may be directly acquired from the created image or indirectly acquired from the pre-stored images corresponding to the object included in the created image, which was recognized by using at least one from the object recognition technology, the optical character recognition technology, or the barcode recognition technology.

As described above, in order to store the collection page including the title (310), the auto-comment (320), the thumbnail (330) and the like, automatically displayed on the first and second areas of the screen (300) onto the database (160), a register button (340) simply needs to be selected.

On the other hand, if the object as the target of the collection in the image (200) is incorrectly selected, the user may tap a cancel button on the top of the screen (300) to return to the previous page.

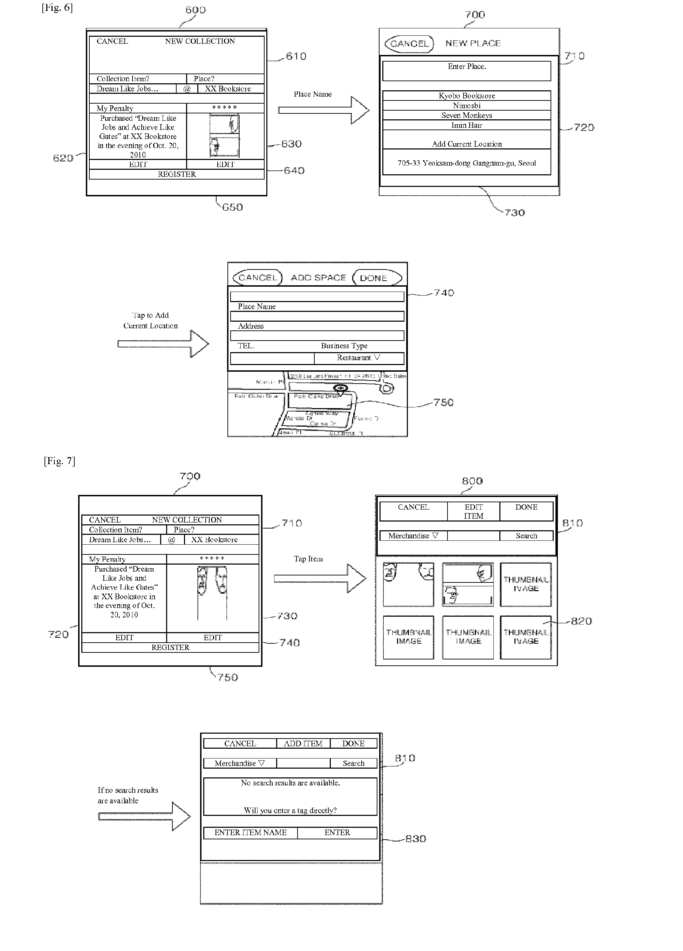

If the object is correctly selected but the auto-comment (320) or the thumbnail (330) is incorrectly provided or it is necessary to add content, the user may select the area(s) where applicable data are displayed on the screen (300) to edit the auto-comment (320) or the thumbnail (330). Detailed explanation will be provided below by referring to Figures 6 and 7.

Figure 4 is a diagram for describing a process of performing a collection for the object in an embodiment example of the present invention.

If the user checks the data of the collection page, including the auto-comment (320), the thumbnail (330), etc. as displayed on the screen (300) and taps the register button (340) to perform the collection, a collecting image (350) is displayed for showing the user a course of storing the data of the collection page onto the database (160).

If the storing process is completed, a display (400) which informs that the storing process was completed appears. It is possible to display an image (420) corresponding to the thumbnail (330) of the object targeted for the collection on the display (400). On the top, a convert button (410) which allows the user to confirm the completion of the collection and move to another screen is displayed.

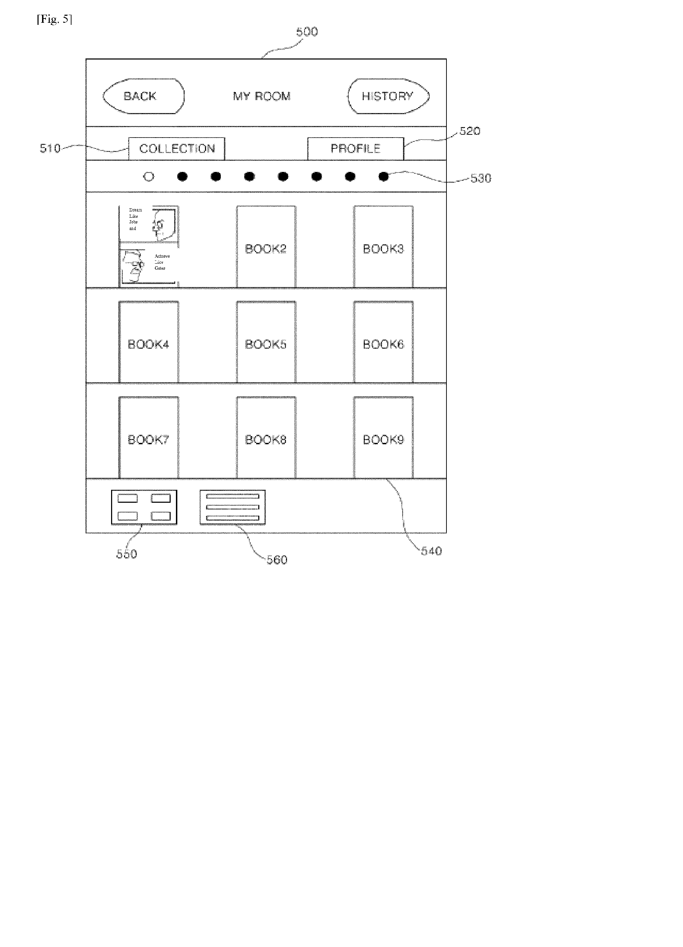

Figure 5 is a diagram for describing a process of managing the collected object in an embodiment example of the present invention.

When referring to Figure 5, "My Room," where objects collected by a specific user are displayed as if books (540) are displayed on a bookshelf, i.e., a management screen (500), is shown. At this time, if multiple users are accessible to the database (160), a virtual space, where each user may manage the data of the objects which each user collected, may be allotted to each user. For efficiency and accessibility to data, the collected information, furthermore, may be separated and managed by each user.

The image of each book (540) displayed on the bookshelf corresponds to each collected object. If each collected object is a book as illustrated in Figure 2, the image of the book (540) may be an actual cover of the book and if the object is a movie, the movie's poster, etc. may be utilized. The collection button (510) on the top of the management screen (500) may be tapped to view the management screen (500) displayed in a form of bookshelf or a profile button (520) may be tapped to check the profile of the user who completed the collection, detailed information on the collection or the like.

As illustrated in Figure 5, the management screen (500) may display each collection object as a book (540) shaped icon or in a form of a sentence representing the typical characteristics of each collection object (the object name, the location where the collection was performed, the time when the collection was performed, etc.). The object may be selected after tapping either an icon-shaped button (550) or a sentence-type button (560) on the bottom of the management screen (500), but it will not be limited thereto.

Figure 6 is a drawing for describing a process of editing the auto-comment of an object in an embodiment example of the present invention.

When referring to Figure 6, a screen (600) on which the data of an auto-comment (620) and thumbnail (630) of an object is newly collected is displayed. On the top of the screen (600), a type (or name) of the object for the collection and the location where the collection was performed are displayed as representative information (610). As shown in Figure 3, on the bottom of the screen (600), a collection button (650) for registering a collection page is displayed.

If a user determines the location where the collection was performed is wrongly entered in the representative information (610) and then taps the location displayed on the right side in the representative information (610) to edit it, a location editing screen (700) as illustrated at the second place on Figure 6 is displayed. On the location editing screen (700), an entry button (710) where the user may directly enter a location, a list button (720) where the list of POIs registered around the location is displayed as a candidate and current location information (730) where a current location may be added etc. are displayed.

If the user taps the entry button (710) to enter the location directly, a keypad may be displayed to enter characters on the screen. On the other hand, if the user selects a specific item on the list button (720) and taps it, the selected item is applied to the location where a new collection was performed.

On the other hand, if the user taps the present location information (730) to add the present location, it may be possible to make an entry window (740) where the name, address, phone number, etc. of the present location may be entered and a map (750) in a certain scale where the present location is displayed appear. The user may check where the user is located on the map (750) and then drag the map to edit the location or enter the location information which the user wants on the entry window (740) by referring to the map displayed as his or her present location.

If the entry is completed, the location information edited by the user appears on the representative information (610) of the screen (600) and the location where the collection was performed included in the auto-comment (620) may also be modified and then displayed again. As described above in Figure 3, it is needless to say that the screen area where the auto-comment (620) is displayed may be tapped to edit the auto-comment (620) directly.

Figure 7 is a diagram for interpreting a process of editing the thumbnail of an object in an embodiment example of the present invention.

If the user intends to edit the thumbnail (730) of the object displayed on the screen because it is not appropriate, the user taps the screen area, where the thumbnail (730) is displayed, or an edit button (740) on the bottom thereof. Upon tapping by the user, an image editing screen (800) is displayed to allow the user to modify the thumbnail (730).

On the image editing screen (800), an object search button (810) with which the user may select the type of object for the collection or enter the name of the object directly is provided. If the user selects the type of object or enters the name directly and then taps the object search button (810), an image list (820) of images corresponding to the object inputted by the user may be browsed and displayed on the screen.

If the thumbnail that the user wants exists on the list (820) searched, the user may select the corresponding image from the list (820) to make an entry. If there are no search results available, a tag input window (830) for helping the user to enter a tag directly may also be offered.

Next, the communication part (150) in accordance with one embodiment example of the present invention may perform a function of allowing the terminal (100) to communicate with an external device.

In accordance with one embodiment example of the present invention, the database (160) is a concept of a database not only in terms of narrow meaning but also in terms of broad meaning which include data records, etc. based on computer file systems. From this aspect, it must be understood that if even a set of simple operation processing logs may be browsed and data extracted from the set, it may be included in a database as stated in the present invention. While the database (160) illustrated in Figure 1 is configured by being included in a terminal (100) for supporting collection of an object included in an image, but the database (160) may be possibly configured separately from the terminal (100) by the necessity of a person skilled in the art who implements the present invention.

Next, the control part (170) in accordance with one embodiment example of the present invention performs a function of controlling data flow among the image taking part (110), the auto-comment creating part (120), the correspondence image selecting part (130), the collection performing part (140), the communication part (150) and the database (160). In other words, the control part (170) in accordance with the present invention controls the flow of data from/to outside or among the components of the terminal (100) to force the image taking part (110), the auto-comment creating part (120), the correspondence image selecting part (130), the collection performing part (140), the communication part (150) and the database (160) to perform their unique functions.

The embodiment examples described above according to the present invention can be implemented in the form of a program command that may be executed through a variety of computer components and recorded on a computer-readable recording media. The computer readable media may include solely or in combination the program commands, data files and data structures. The program commands recorded on the computer-readable recording medium may be especially designed and configured for the present invention or may be known to and usable by a person skilled in the field of computer software. Examples of the computer-readable recording medium include magnetic media such as hard disk, floppy disk, and magnetic tape, optical media such as CD-ROM and DVD, magneto-optical media such as floptical disk and hardware devices such as ROM, RAM and flash memory especially configured to store and execute program commands. Program commands include not only a machine language code made by a compiler but also a high level code that can be used by an interpreter etc., which is executed by a computer. The hardware device may be configured to work as one or more software modules to perform the action according to the present invention, and its reverse is also the same.

While the present invention has been described so far by certain details such as specific components and limited embodiment examples and drawings, they were merely provided to promote overall understanding of the present invention, and the present invention is not limited by the embodiment examples above. A person with a common knowledge of the field to which the present invention belongs may attempt various modifications and changes based on such descriptions.

Therefore, the ideas of the present invention must not be confined to the embodiment examples described, and the Scope of Patent Claims to be described later as well as everything including variations equal or equivalent to the Scope of Patent Claims would belong to the category of the ideas of the present invention.

## Claims

1. A method for supporting collection of an object included in a created image comprising:
(a) a step in which a terminal is used to operate an image of an object; (b) a step to support for performing collection of the object included in the image once the image is created, at least one from the recognition information on the identity of the object, recognition information on the place where the image was created, and recognition information on the time when the image was created is used to automatically create and provide a combined sentence correct under the grammar of a language as an auto-comment for the object on a first area on the screen of the terminal, and a thumbnail corresponding to the recognized object is automatically acquired and displayed on a second area of the screen of the terminal, and (c) a step in which, once selection information on a collection performing button is inputted, data to be provided on the first area and the second area is allowed to be provided onto a storage space so as to perform collection on the object to creat a collection page.

2. The method recited in Claim 1, wherein it further includes (d) a step in which the collection information acquired from multiple terminals is used to acquire relationship information on the preference among the users of the multiple terminals that collected the same or similar object.

3. The method recited in Claim 1, wherein the first area comprises multiple areas that are divided in space.

4. The method recited in Claim 1, wherein the sentence provided in the first area is editable as provided.

5. The method recited in Claim 1, wherein the thumbnail provided on the second area is acquired directly from the created image or indirectly from the pre-stored image corresponding to the recognized object included in the created image.

6. The method recited in Claim 1, wherein the recognition information on the identity of the object is acquired by applying at least one from an object recognition technology, an optical character recognition technology or a barcode recognition technology.

7. The method recited in Claim 1, wherein the collected information is stored so that it may be managed by a user who collects the object.

8. The method recited in Claim 7, wherein a unique virtual space is allotted to each user to allow the user to manage the collected information.

9. The method recited in Claim 8, wherein each image relating to each collected object by the user for a period of time is made as a book image and displayed as if being displayed on a bookshelf through the virtual space.

10. The method recited in Claim 1, wherein if the recognition information on the place displayed on the first area is inappropriately selected, POI related information around the recognized place is provided to support for selecting the POI directly or information on a present location is provided to support for registering the present location as a new POI.

11. A terminal for supporting collection of an object included in a created image comprising:
an image taking part that creates an image of an object, an auto moment creating part that once the image is created, to support for performing collection of the object included in the image, at least one from the recognition information on the identity of the object, recognition information on the place where the image was created, and recognition information on the time when the image was created is used to automatically create and provide a combined sentence correct under the grammar of a language as an auto-comment for the object on a first area on the screen,
a correspondence image selecting part that, once the image was created by the image taking part, to support for performing collection of the object included in the image, automatically acquires and displays a thumbnail corresponding to the recognized object on the second area of the screen, and
a collection performing part that, once selection information on a collection performing button is inputted, allows the data to be provided on the first area and the second area to be provided onto a storage space so as to perform collection on the object to create a collection page.

12. The terminal recited in Claim 11, wherein it further includes a human relationship inferring part that uses the collection information acquired from the multiple terminals to acquire information on a relationship with respect to preferences of users who collect the same or similar objects at the multiple terminals.

13. The terminal recited in Claim 11, wherein the first area is comprised of multiple areas divided in space and displayed.

14. The terminal recited in Claim 11, wherein the auto-comment creating part is provided to allow the sentence provided to be editable on the first area.

15. The terminal recited in Claim 11, wherein the correspondence image selecting part acquires the thumbnail provided on the second area directly from the created image or indirectly from the pre-stored images corresponding to the object upon recognizing the object included in the created image.

16. The terminal recited in Claim 11, wherein the auto-comment creating part acquires recognition information on the identity of the object by applying at least one from an object recognition technology, an optical character recognition technology or a barcode recognition technology to the image.

17. The terminal recited in Claim 11, wherein the collection performing part stores the collected information onto the storage space so that it may be managed by each user.

18. The terminal recited in Claim 17, wherein a unique virtual space is allotted so that the collected information may be managed by each user in the storage space.

19. The terminal recited in Claim 18, wherein each image related to each collected object by the user for a period of time is made as a book image and displayed as if being displayed on a bookshelf through the virtual space.

20. The terminal recited in Claim 11,wherein if the recognition information on the place displayed on the first area is inappropriate, POI related information around the recognized place is provided to support for selecting the POI directly or information on a present location is provided to support for registering the location as a new POI.

21. A computer-readable recording medium on which a computer program is recorded to execute the method according to any one of the claims from Claim 1 to Claim 10.
